# EUROPEAN PATENT SPECIFICATION

(11) **EP 2 116 925 B1**
(45) Date of publication and mention of the grant of the patent: **17.02.2016**
(21) Application number: 07850965.0
(22) Date of filing: 20.12.2007
(51) Int. Cl.: G06F 3/048

(54) **METHOD, SYSTEM, PROGRAM FOR ASSISTING OBJECT SELECTION WHEN WEB PAGE IS AUTHORED**
VERFAHREN, SYSTEM, PROGRAMM ZUR UNTERSTÜTZUNG DER OBJEKTAUSWAHL, WENN EINE WEBSEITE VERFASST WIRD
PROCÉDÉ, SYSTÈME, PROGRAMME POUR AIDER UNE SÉLECTION D'OBJET LORSQU'UNE PAGE INTERNET EST CRÉÉE

(30) Priority: 28.12.2006 JP 2006355575
(43) Date of publication of application: 11.11.2009
(73) Proprietor: International Business Machines Corporation, Armonk, NY 10504 (US)
(72) Inventor: HORIUCHI, Yoshio, Yamato-shi, Kanagawa 242-8502 (JP)
(74) Representative: Graham, Timothy Abbey
(86) International application number: PCT/JP2007/074530
(87) International publication number: WO 2008/081733

(56) References cited:
- JP-A- 04 111 051
- JP-A- 10 222 506
- JP-A- 2000 035 961
- JP-A- 2001 027 924
- US-A1- 2003 196 174
- US-B1- 6 278 991

## Description

### TECHNICAL FIELD

The present invention relates to web page authoring. In particular, the present invention relates to a method, a system, and a program for supporting object selection in web page authoring.

### BACKGROUND ART

Web pages are written in tag-based markup languages (HTML, XML, JSP, etc.). In web page editing, editing operations such as insertion and deletion of tags and setting of tag properties are basically tag-based operations, that is, the operations are performed by selecting a tag to be edited. Many tools provide editing screens in which tags are visualized as if they appear on a browser (hereinafter referred to as WYSIWYG editing screens), which increases convenience. However, recently, the degree of complexity of web pages has been increasing. Such complex web pages have tags arranged closely and densely, making it difficult to select a tag to be edited in a WYSIWYG editing screen. If an area corresponding to a tag is completely overlapped with an area corresponding to another tag, it is difficult for a user to see if a desired tag is selected when he or she clicks a certain point.

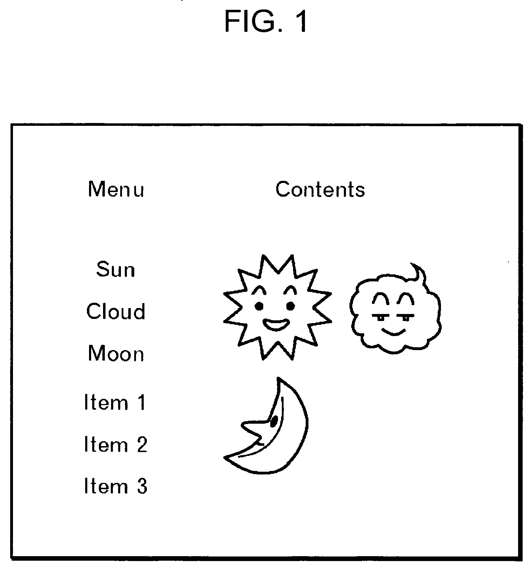

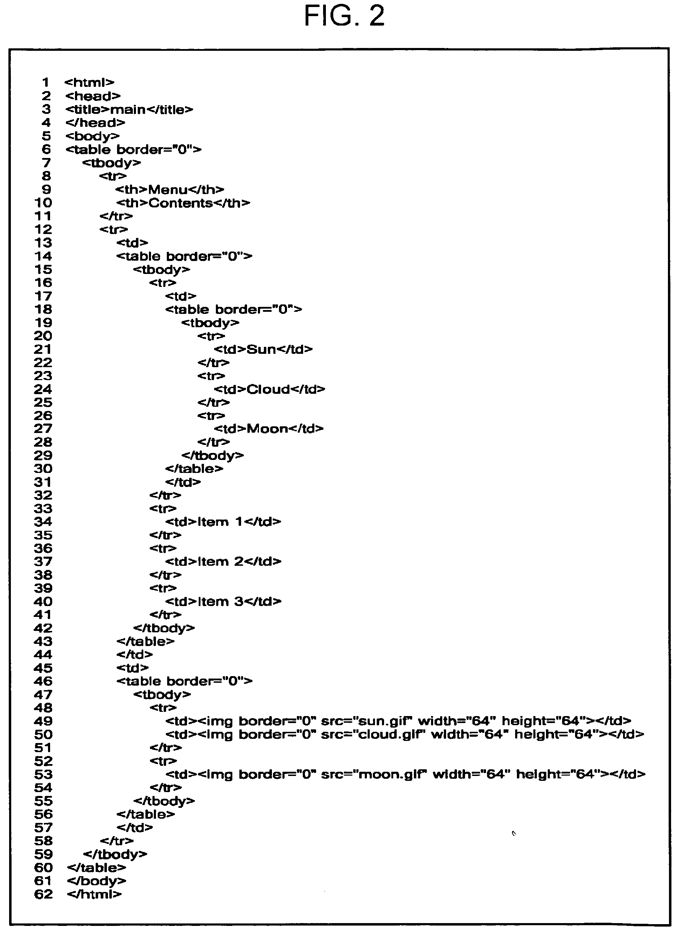

For example, even for a simple editing screen as illustrated in Fig. 1, a corresponding HTML source file has a nested structure as illustrated in Fig. 2. Thus, a desired tag may not be selected only by clicking on a part of the editing screen. To address this, a conventional web page authoring tool such as Page Designer (see "Page Designer", http://www-06.ibm.com/jp/software/websphere/developer/wsad/workshop/pdf/8.pdf) has a special user interface (UI) in which HTML tags are displayed in a hierarchical manner. However, this UI has a normal tree structure, and the layout of a WYSIWYG editing screen is not reflected on the UI.

If the source code illustrated in Fig. 2 is directly displayed, tag selection may easily be performed. However, the source code display appears markedly different from the corresponding WYSIWYG editing screen. Thus, it may not be possible to recognize where an area corresponding to the selected tag is located in an actual web page by simply viewing the source code display. A technique has been known in which icons corresponding to open/close of a tag are displayed on an editing screen with a view to increasing convenience in tag selection. However, this technique lowers the WYSIWYG effect for the entire page.

US Patent Application publication number US 2003/0196174 A1 (Pierre Cote, Joseph Paul - Emile [US] et al "Discoverabilty and Navigation of Hyperlinks via Tabs", Oct. 16 2003) discloses a method for discovering and navigating among hyperlinks through the use of a keyboard. In response to tabbing the first hyperlink is given focus and a focus shape is drawn around the text or graphics for the hot region of the hyperlink.

US Patent number US 6,278,991 B1 (Ebert, Peter [DE] "Browser for Hierarchical Structures Tabs", Aug. 21 2001) discloses a browser for viewing data representing objects and organized in a hierarchical structure to display and interact with links to the data.

As described above, tag selection has conventionally been performed at the expense of or by ignoring the WYSIWYG effect for a web page editing screen.

### SUMMARY OF THE INVENTION

Accordingly, an object of the present invention is to facilitate tag selection in web page authoring without lowering the WYSIWYG effect for an editing screen.

The present invention is intended to solve the problem as to how to select a tag of a web page on a WYSIWYG editing screen. In web page authoring, selecting a tag practically means selecting a view object specified by the tag as an object to be edited. Thus, selection of a tag and selection of a view object (also simply referred to as an object) are herein used interchangeably.

According to a first aspect of the present invention, there is provided a method for supporting object selection in web page authoring, the method comprising the steps of-determining a reference point for object selection in response to a user action performed on an editing screen for a web page, setting a reference area enclosing the reference point, selecting a first view object placed closest to the reference point as a reference view object, from among a set of view objects, wherein each view object of the set of view objects is-included in the reference area, and characterised by: selecting a second view object related to the reference view object from among the set of view objects, wherein the second view object comprises at least one of a sibling object, a parent object, and a child object of the reference view object; and drawing a first rectangle representing the reference view object and a second rectangle representing the related view object with predetermined space therebetween which allows object selection, the first rectangle and the second rectangle being drawn independently of the reference view object and the second view object, wherein each of said view objects comprises an object being viewed on said editing screen of said web page.

According to a second aspect of the present invention, there is provided an apparatus for supporting object selection in web page authoring, which includes a reference point determining unit determining a reference point for object selection in response to a user action performed on an editing screen for a web page; a reference area setting unit for setting a reference area enclosing the reference point; a reference view object selecting unit for selecting a first view object placed closest to the reference point as a reference view object from among a set of view objects, wherein each view object of the set of view objects is included in the reference area; and characterised by: a related view object selecting unit for selecting a second view object related to the reference view object from among the set of view objects, wherein the second view object comprises at least one of a sibling object, a parent object, and a child object of the reference view object; and a drawing unit for drawing a first rectangle representing the reference view object and a second rectangle (202) representing the second view object with a predetermined space therebetween which allows object selection, the first rectangle and the second rectangle being drawn independently of the reference view object and the second view object, wherein each of said view objects comprises an object being viewed on said editing screen of said web page.

According to a third aspect of the present invention, there is provided a program for supporting object selection in web page authoring, the program causing a computer to execute the steps of: determining a reference point for object selection in response to a user action performed on an editing screen for a web page; setting a reference area enclosing the reference point; selecting a first view object placed closest to the reference point as a reference view object from among a set of view objects , wherein each view object of the set of view objects is included in the reference area; and characterised by: selecting a second view object related to the reference view object from among the view objects included in the reference area, wherein the second view object comprises at least one of a sibling object, a parent object, and a child object of the reference view object; and drawing a first rectangle representing the reference view object and a second rectangle (representing the second view object with a predetermined space therebetween which allows object selection, the first rectangle and the second rectangle being drawn independently of the reference view object and the second view object, wherein each of said view objects comprises an object being viewed on said editing screen of said web page.

The present invention is intended to support selection of an object on a WYSIWYG editing screen in web page authoring. Since, in web page authoring, what is to be edited is the WYSIWYG editing screen, the present invention always permits a screen to be edited, which is equivalent to editing results, during editing operations.

### BRIEF DESCRIPTION OF THE DRAWINGS

A preferred embodiment of the present invention will now be described, by way of example only, with reference to the accompanying drawings, in which:
Fig. 1 is a diagram briefly illustrating an example of a web page to be supported by the present invention.
Fig. 2 is a diagram illustrating an HTML source file of the web page illustrated in Fig. 1;
Fig. 3 is a diagram illustrating an example of an environment for implementing the present invention;
Fig. 4 is a block diagram illustrating a functional configuration of a client according to the present invention;
Fig. 5 is a flowchart illustrating operations of a client according to present invention;
Fig. 6 is a diagram illustrating a web page in Fig. 1 together with a tag structure;
Fig. 7 is a diagram illustrating a state in which a reference area is set in the web page in Fig. 1;
Fig. 8 is a diagram illustrating the HTML source file in Fig. 2 in the form of a tree;
Fig. 9 is a diagram illustrating a basic concept for drawing selected objects and related icons by a drawing unit of a client according to present invention;
Fig. 10 is a diagram illustrating an example of an actual drawing result obtained by a drawing unit of a client according to the present invention; and
Fig. 11 is a block diagram illustrating an example of a data processing system that can be implemented as a client according to the present invention.

### DETAILED DESCRIPTION OF THE INVENTION

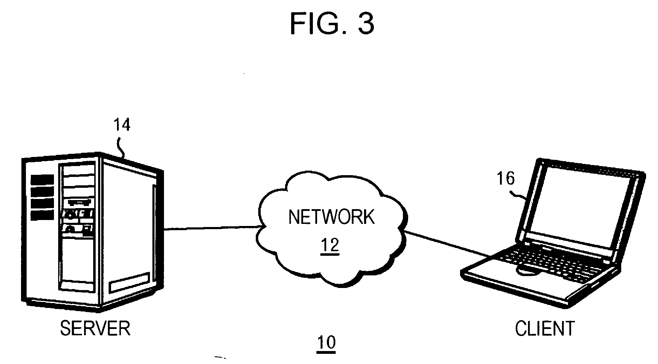

Fig. 3 illustrates an example of an environment for implementing the present invention. A system 10 includes a server 14 and a client 16 which are connected to a network 12. In the system 10, a web page stored in the server 14 can be edited in the client 16. The network 12 may be any network such as the Internet, a local area network (LAN), or a wide area network (WAN). It is also possible to connect a plurality of clients to the network so that the clients cooperatively edit a web page. Such an editing scheme is called web collaboration or simply collaboration and is employed in various fields as well as in web page authoring. Needless to say, the present invention can be implemented not only in the network environment illustrated in Fig. 3, but also in a stand alone client.

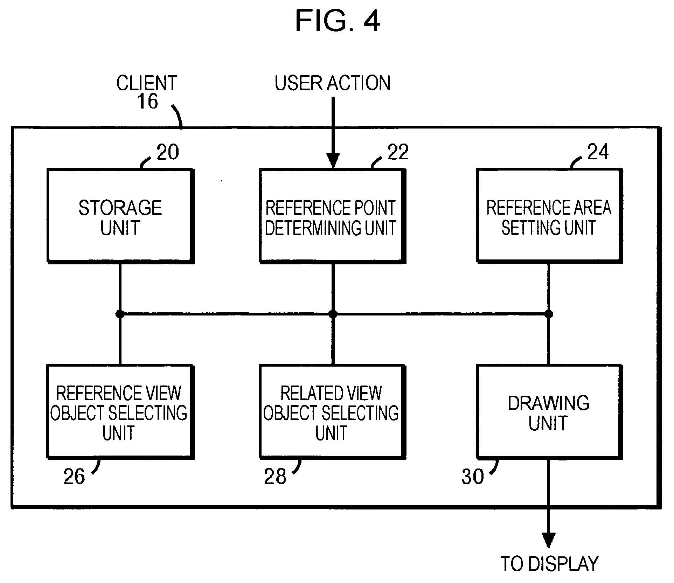

Fig. 4 illustrates an example of a functional configuration of the client 16 which performs authoring of a web page according to the present invention. The client 16 has a storage unit 20, a reference point determining unit 22, a reference area setting unit 24, a reference view object selecting unit 26, a related view object selecting unit 28, and a drawing unit 30. The storage unit 20 stores data of a web page (for example, an HTML source file) received from the server 14 through the network 12. The reference point determining unit 22 determines a reference point for object selection in response to a user action performed on an editing screen for a web page. The reference area setting unit 24 sets a reference area which encloses the reference point determined by the reference point determining unit 22. The reference view object selecting unit 26 selects a view object placed closest to the reference point as a reference view object from among a plurality of view objects included in the reference area set by the reference area setting unit 24. The related view object selecting unit 28 selects a view object which is related to the reference view object from among the view objects included in the reference area set by the reference area setting unit 24. The drawing unit 30 draws a first rectangle representing the reference view object and a second rectangle representing the related view object with a space therebetween which allows object selection. These first and second rectangles are drawn independently of the reference view object and the related view object. The drawing unit 30 outputs a drawing result to a display (not shown) of the client 16.

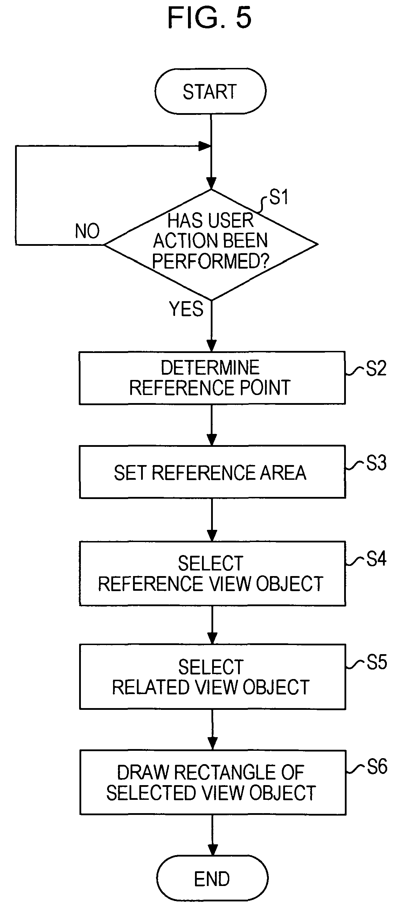

Referring now to a flowchart of Fig. 5, an object selection operation in web page authoring performed by the client 16 will be described in detail. It is herein assumed that a web page illustrated in Fig. 1 is displayed on the display of the client 16 as a WYSIWYG editing screen, and the source code illustrated in Fig. 2 is stored in the storage unit 20 of the client 16. Note that the line numbers 1 to 62 in the illustrated source code are provided for ease of description and not included in the actual source code.

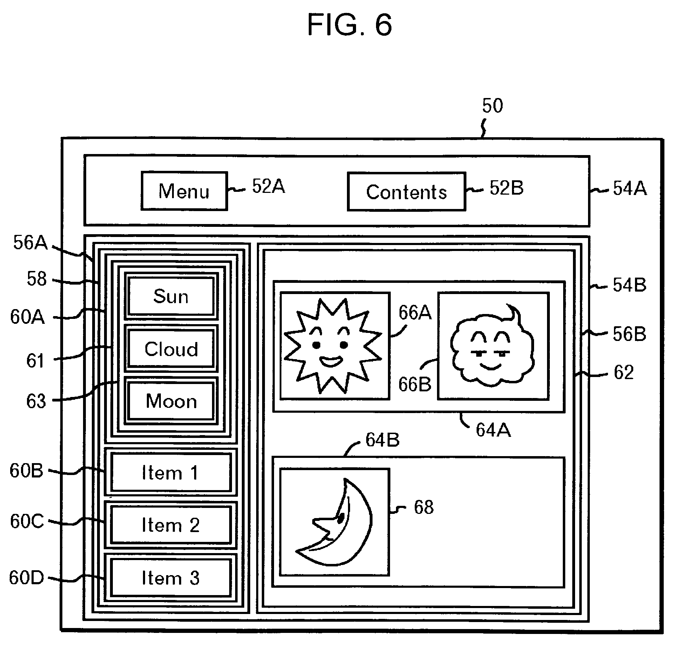

Before proceeding to detailed description of the operation, a tag structure of the web page in Fig. 1 will be briefly described with reference to Fig. 6. In Fig. 6, each field from an open tag to a corresponding close tag in the source code in Fig. 2 is indicated using a rectangle. A table 50 which constitutes the web page includes a first row 54A having a header 52A "Menu" and a header 52B "Contents" (corresponding to the lines 8 to 11 of the source code in Fig. 2) and a second row 54B which does not have a header (corresponding to the lines 12 to 58 of the source code in Fig. 2). The row 54B has a first data cell 56A containing six character strings (corresponding to the lines 13 to 44 of the source code in Fig. 2) and a second data cell (table) 56B containing three images (corresponding to the lines 45 to 57 of the source code in Fig. 2). The table 50 also has a "tbody" field, but the "tbody" field is omitted in this example, and "tbody" fields of other tables are similarly omitted.

The first data cell 56A has a table 58 (corresponding to the lines 14 to 43 of the source code in Fig. 2). The table 58 contains four rows 60A (corresponding to the lines 16 to 32 of the source code in Fig. 2), 60B (corresponding to the lines 33 to 35 of the source code in Fig. 2), 60C (corresponding to the lines 36 to 38 of the source code in Fig. 2), and 60D (corresponding to the lines 39 to 41 of the source code in Fig. 2). The row 60A contains a data cell 61 (corresponding to the lines 17 to 31 of the source code in Fig. 2) and a table 63 (corresponding to the lines 18 to 30 of the source code in Fig. 2). The table 63 contains three rows containing data cells "Sun", "Cloud", and "Moon", respectively. The row 60B contains a data cell "Item1" (corresponding to the line 34 of the source code in Fig. 2). The row 60C contains a data cell "Item2" (corresponding to the line 37 of the source code in Fig. 2). The row 60D contains a data cell "Item3" (corresponding to the line 40 of the source code in Fig. 2).

The second data cell 56B has a table 62 (corresponding to the lines 46 to 56 of the source code in Fig. 2). The table 62 contains two rows 64A (corresponding to the lines 48 to 51 of the source code in Fig. 2) and 64B (corresponding to the lines 52 to 54 of the source code in Fig. 2). The row 64A includes a data cell 66A containing an image of "Sun" (corresponding to the line 49 of the source code in Fig. 2) and a data cell 66B containing an image of "Cloud" (corresponding to the line 50 of the source code in Fig. 2). The row 64B includes a data cell 68 containing an image of "Moon" (corresponding to the line 53 of the source code in Fig. 2).

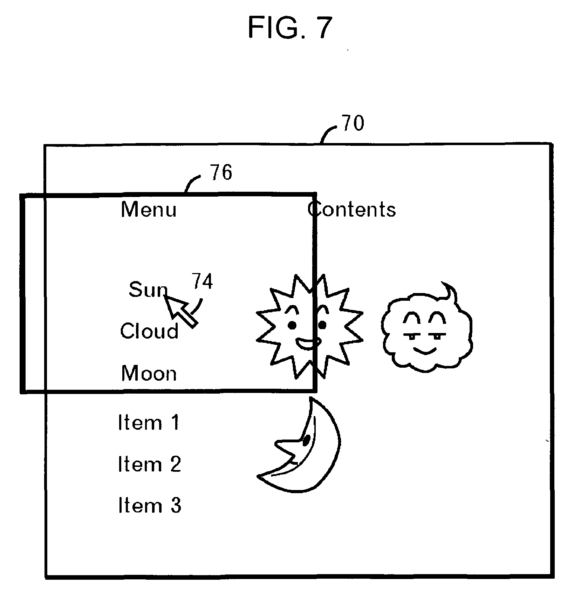

Referring back to Fig. 5, at STEP S1, the client 16 checks whether a user action for selecting an object (tag) has been performed on the editing screen in Fig. 1. This user action is predefined. For example, an action of pressing a Ctrl key while clicking a right button of a mouse can be set as a trigger for object selection. Needless to say, another mouse/key operation can be defined as the trigger for object selection.
If a user action has been performed, the reference point determining unit 22 determines a reference point for the object selection at STEP S2. For example, the reference point determining unit 22 can determine a position of a caret or a mouse cursor as the reference point. When the reference point is determined, the reference area setting unit 24 sets a reference area that encloses the reference point at STEP S3. This reference area is set to have a predetermined size that allows selection of several objects in the vicinity of the reference point. For example, the height and width of the reference area can be set to be one third of those of the editing screen. An example of a reference area is illustrated in Fig. 7. When a cursor 74 is placed at a position as illustrated in Fig. 7 in an editing screen 70, a reference area 76 indicated by a thick line is set. In the example of Fig. 7, the reference area 76 has a shape of a rectangle, but the shape of the reference area 76 is not limited to a rectangle.

Referring back to Fig. 5, when the reference area is set, the reference view object selecting unit 26 selects, at STEP S4, an object that is placed closest to the reference point from among view objects included in the reference area. Such an object closest to the reference point may be an object that includes the reference point, an object whose perimeter is adjacent to the reference point, etc., and is selected on the basis of the tree structure as shown in Fig. 2. Explaining with the examples of Fig. 6 and Fig. 7, since the reference point indicated by the position of the cursor 74 is located at a data cell containing the character string "Sun", the reference view object selecting unit 26 may select the data cell as a reference view object.

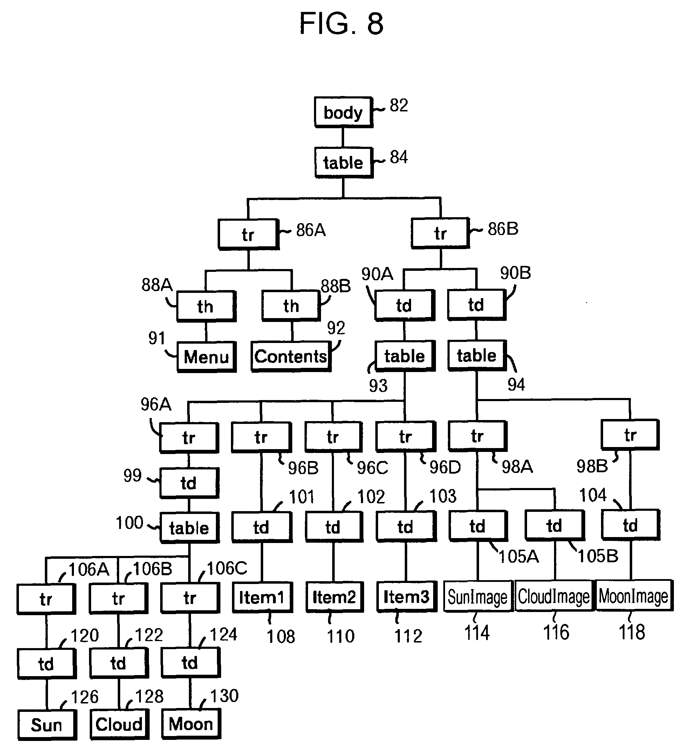

When the reference view object is selected, the related view object selecting unit 28 selects, at STEP S5, a view object which is related to the reference view object selected by the reference view object selecting unit 26 from among the view objects included in the reference area. This related view object is at least one of a sibling object, a parent object, and a child objectofthe reference view object. In the following, the selection of the related view object will be described with reference to a tree structure shown in Fig. 8.

Fig. 8 shows the source code of Fig. 2 in the form of a tree. The storage unit 20 also stores this tree structure. Correspondence relationships between individual nodes of the tree and the line numbers of the source code are as follows.

| | |
|---|---|
| body 82 (root node) | :lines 5-61 |
| table 84 | :lines 6-60 |
| tr 86A | :lines 8-11 |
| tr 86B | :lines 12-58 |
| th 88A | :line 9 |
| th 88B | :line 10 |
| td 90A | :lines 13-44 |
| td 90B | :lines 45-57 |
| Menu 91 | :line 9 |
| Contents 92 | :line 10 |
| table 93 | :lines 14-43 |
| table 94 | :lines 46-56 |
| tr 96A | :lines 16-32 |
| tr 96B | :lines 33-35 |
| tr 96C | :lines 36-38 |
| tr 96D | :lines 39-41 |
| tr 98A | :lines 48-51 |
| tr 98B | :lines 52-54 |
| td 99 | :lines 17-31 |
| td 101 | :line 34 |
| td 102 | :line 37 |
| td 103 | :line 40 |
| td 105A | :line 49 |
| td 105B | :line 50 |
| td 104 | :line 53 |
| table 100 | :lines 18-30 |
| Item1 108 | :line 34 |
| Item2 110 | :line 37 |
| Item3 112 | :line 40 |
| Sun image 114 | :line 49 |
| Cloud image 116 | :line 50 |
| Moon image 118 | :line 53 |
| tr 106A | :lines 20-22 |
| tr 106B | :lines 23-25 |
| tr 106C | :lines 26-28 |
| td 120 | :line 21 |
| td 122 | :line 24 |
| td 124 | :line 27 |
| Sun 126 | :line 21 |
| Cloud 128 | :line 24 |
| Moon 130 | :line 27 |

The related view object selecting unit 28 searches the tree structure of the source code stored in the storage unit 20 for a sibling object, a parent object, and a child object of the reference view object in that sequence from among a plurality of view objects included in the reference area. When a parent object or a child object is found, the related view object selecting unit 28 then searches for a sibling object, a parent object, and a child object of the found parent or child object in that sequence. The related view object selecting unit 28 repeats the same search sequence until no object is found.

Specifically, in the examples of Fig. 6 and Fig. 7, since the data cell containing the character string "Sun" has been selected as the reference view object, the related view object selecting unit 28 first searches for a sibling object of the data cell from among the objects included in the reference area 76 shown in Fig. 7. In Fig. 8, the data cell corresponds to the node 120. However, since the node 120 does not have a sibling node, the related view object selecting unit 28 searches for a parent node and a child node of the node 120. The node 120 has a parent node 106A and a child node 126. Since both the node 106A and the node 126 are included in the reference area 76, the related view object selecting unit 28 selects these nodes as related view objects.

Subsequently, the related view object selecting unit 28 searches for a sibling node of the parent node 106A. In the example of Fig. 8, the node 106A has sibling nodes 106B and 106C. Since both the sibling nodes 106B and 106C are included in the reference area 76, the related view object selecting unit 28 selects these nodes as related view objects. Further, the related view object selecting unit 28 searches for a parent node of the nodes 106A, 106B, and 106C, and child nodes of the nodes 106B and 106C and thus selects the nodes 100, 122, 124, 128, and 130. Likewise, the related view object selecting unit 28 continues to search for a sibling node, a parent node, and a child node until no related view object included in the reference area is found. According to the present invention, searches for a sibling node, a parent node, and a child node can be performed in any order, and it is not necessary to perform a search for a sibling node first.

When the above search sequence is completed, the related view object selecting unit 28 stores the selected objects in the storage unit 20 in the form of a tree structure such as the one shown in Fig. 8. Further, the related view object selecting unit 28 provides the drawing unit 30 with a pointer for specifying the reference view object.

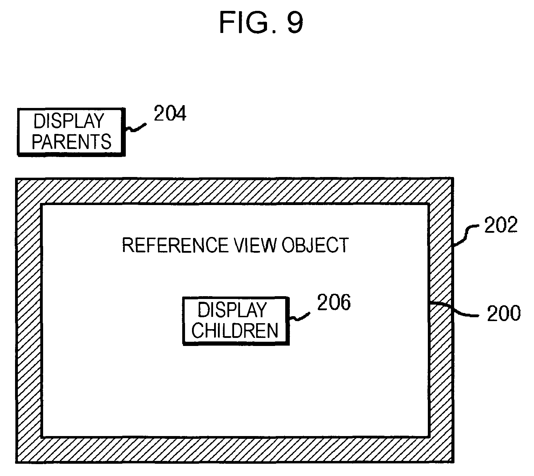

When the selection of related view objects is completed, the drawing unit 30 draws, at STEP S6, a first rectangle representing the reference view object and a second rectangle representing a related view object with a space therebetween which allows object selection. At this time, the drawing unit 30 draws the first rectangle and the second rectangle independently of the reference view object and the related view object, in a pop-up UI, for example. Alternatively, it may be possible to temporarily rewrite associated parts in the WYSIWYG editing screen. An example of the drawing operation is illustrated in Fig. 9. The drawing unit 30 first draws a first rectangle 200 representing the reference view object specified by the pointer by using a layout result of the original reference view object. The size of the rectangle 200 can be determined by taking into account the size of a web page editing screen and the positions of the reference view object and the related view object. If, for example, a character string "AAAAAAABBBBBBBBCCCC" is separated into "AAAAAAABBBBB" and "BBBCCCC" due to wrapping of the character string, two rectangles can be provided. A combination of such rectangles is also applied to the present invention.

For a related view object which is a parent object, the drawing unit 30 draws a second rectangle 202 representing the related view object with a space that allows object selection (indicated by shading in Fig. 9) between the rectangles 200 and 202. A user can temporarily select the related view object, i.e., a desired tag, by clicking, for example, the perimeter of the rectangle 202. Thus, it is preferable to draw the perimeter having a thickness sufficient for the selecting operation. The width of the space can arbitrarily be set. For example, the width can be determined on the basis of the height of a default font of a web page. If the number of parent nodes obtained by tracing up the tree structure created by the related view object selecting unit 28 is very large, resulting in an excessive size of a pop-up UI to be drawn, drawing of the parent objects can be discontinued. Instead, an icon 204 indicating that there are more parent objects can be displayed in the upper left portion of the screen. For a child object, the drawing unit 30 draws the second rectangle inside the rectangle 200 of the reference view object. Also in this case, a predetermined space is provided between the first and second rectangles. If the number of child objects (descendants) obtained by tracing down the tree structure created by the related view object selecting unit 28 is too large to draw all rectangles corresponding to the child objects inside the rectangle 200, an icon 206 indicating that there are more child objects can be provided inside the rectangle 200, for example. When the user clicks the icon 204 or the icon 206, the drawing unit 30 re-draws the entire rectangles including the omitted parent object or child object as a new reference view object. When there is room inside the rectangle 200, the drawing unit 30 may draw a corresponding character or image inside a child object drawn last. In addition, there may be a case where the reference view object has a plurality of child objects that are siblings and each of the child objects has many descendants and thus all of the descendant objects cannot be drawn inside the rectangle 200. In such a case, the icon 206 is displayed inside a rectangle corresponding to each child object.

For a sibling object, the above arrangement is not necessary, since a sibling object is not overlapped with the reference view object. However, a space between rectangles corresponding to the reference view object and the sibling object may be determined as described above.

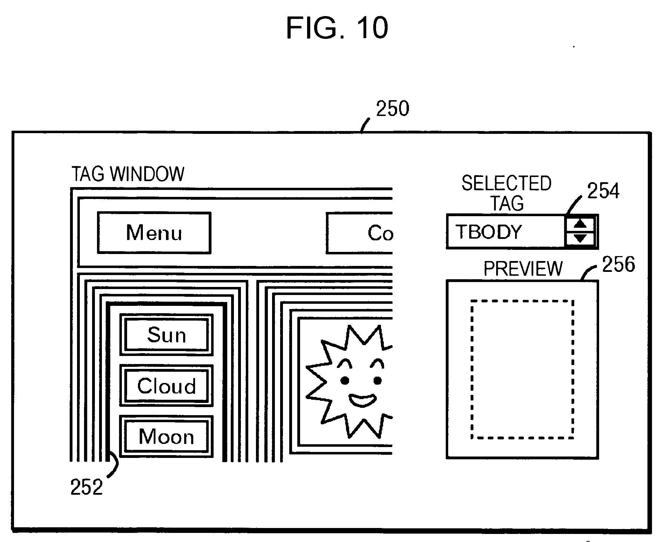

Fig. 10 illustrates a pop-up UI which is eventually obtained by the drawing operation performed by the drawing unit 30. A pop-up UI 250 can be displayed separately from a window of the editing screen illustrated in Fig. 1 or displayed so as to be partially superimposed on the window but not to be overlapped with the reference area. The pop-up UI 250 contains a tag window, in which the rectangles corresponding to the reference view object and the related view objects are drawn, and fields 254 and 256 each indicating a status of a selected tag. The field 254 contains the name of a tag which is currently temporarily selected by a user. The field 256 is a preview area indicating the temporarily selected tag. In the example of Fig. 10, a tag indicated by a thick line 252 for highlighting is temporarily selected. The user can select a specific tag displayed in the tag window by clicking a specific rectangle displayed in the tag window or searching for a tag to be selected in the upward direction or the downward direction using a triangle or an inverted triangle, respectively, provided at the right end of the field 254. When a desired tag is found, a user can enable the selection by, for example, pressing an Enter key. In this case, an area corresponding to the selected tag can be highlighted in a predetermined manner in the editing screen in Fig. 1, so that the user can easily recognize which part of the actual screen is selected.

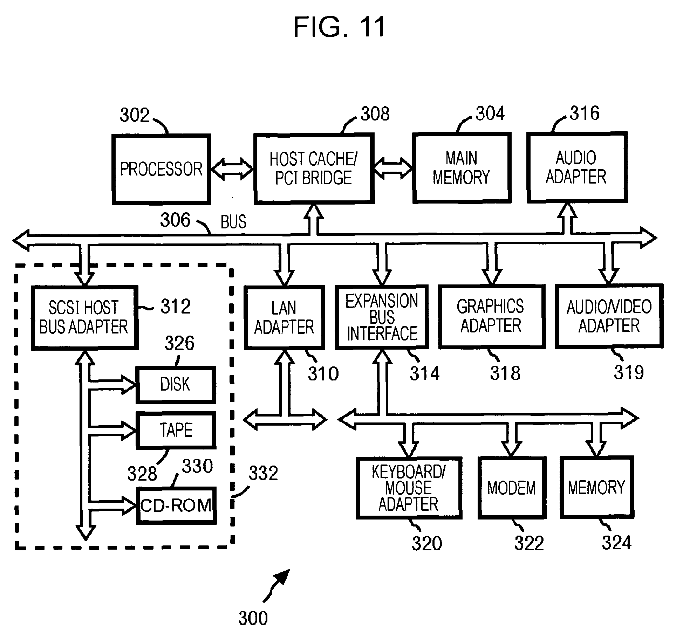

Fig. 11 illustrates an example of a configuration of a data processing system which can be implemented as the client 16. A data processing system 300 employs a PCI local bus architecture. In this example, although the data processing system 300 employs a PCI bus, other bus architectures such as AGP and ISA may be used. A processor 302 and a main memory 304 are connected to a PCI local bus 306 through a PCI bridge 308. The PCI bridge 308 may include an integrated memory controller and a cache memory for the processor 302. Additional connections to the PCI local bus 306 may be made through direct component interconnection or through add-in boards. In the example of Fig. 11, a LAN adapter 310, an SCSI host bus adapter 312, and an expansion bus interface 314 are connected to the PCI local bus 306 by direct component connection. In contrast, an audio adapter 316, a graphics adapter 318, and an audio/video adapter 319 are connected to the PCI local bus 306 by add-in boards inserted into expansion slots. The expansion bus interface 314 provides connection for a keyboard and mouse adapter 320, a modem 322, and an additional memory 324. The SCSI host bus adapter 312 provides connection for a hard disk drive 326, a tape drive 328, and a CD-ROM drive 330. Typical PCI local bus implementations will support three or four PCI expansion slots or add-in connectors.

An operating system runs on the processor 302 to control various components of the data processing system 300 in Fig. 3. The operating system may be a commercially available operating system such as Windows^{®} XP (Windows is a trademark of Microsoft Corporation in the United States, other countries, or both). A program according to the present invention runs under the operating system to realize the various functions described above. The operating system and the program according to the present invention are stored in a storage device such as the hard disk drive 326 and loaded to the main memory 304 when executed by the processor 302.

Those of ordinary skill in the art will appreciate that the hardware in Fig. 11 may vary depending on the implementation. Other internal hardware or peripheral devices, such as a flash ROM (or an equivalent non-volatile memory) and an optical disk drive may be used in addition to or in place of the hardware illustrated in Fig. 11.

While the embodiments of the present invention have been described above with reference to the drawings, the described embodiments are merely illustrative and are not intended to limit the scope of the present invention as defined in the appended claims.

## Claims

1. A method for supporting object selection in web page authoring, the method comprising the steps of:
determining (S2) a reference point for object selection in response to a user action performed on an editing screen (70) for a web page;
setting (S3) a reference area (76) enclosing the reference point; and **characterised by**:
selecting (S4) a first view object placed closest to the reference point as a reference view object from among a set of view objects, wherein each view object of the set of view objects is included in the reference area;
selecting (S5) a second view object related to the reference view object from among the set of view objects, wherein the second view object comprises at least one of a sibling object, a parent object, and a child object of the reference view object; and
drawing (S6) a first rectangle (200) representing the reference view object and a second rectangle (202) representing the second view object with a predetermined space therebetween which allows object selection, the first rectangle and the second rectangle being drawn independently of the reference view object and the second view object, wherein each of said view objects comprises an object being viewed on said editing screen of said web page.

2. The method of claim 1, wherein the step of determining the reference point determines the position of a caret or a mouse cursor (74) as the reference point.

3. The method of claim 1 or 2, wherein the step of setting the reference area (76) sets an area of a predetermined size having the reference point as the centre thereof.

4. The method of any of the preceding claims, wherein when a third view object related to the selected second view object is included in the reference area (76), and the step of selecting (S5) the second view object also selects the third view object.

5. The method of any one of claims 1 to 4, further comprising the step of storing data of the web page in the form of a tree.

6. The method of claim 5 , wherein the step of selecting (S5) the second view object selects the second view object by searching the tree.

7. The method of any one of claims 1 to 6, wherein when the second view object is a parent object of the reference view object, the drawing step (S6) draws the second rectangle (202) outside the first rectangle (200).

8. The method of any one of claims 1 to 7, wherein when the second view object is a child object of the reference view object, the drawing step draws the second rectangle (202) inside the first rectangle (200).

9. The method of any one of claims 1 to 8, wherein the drawing step (S6) draws a pop-up user interface (250) containing the first rectangle (200) and the second rectangle (202).

10. The method of claim 9 , wherein in addition to the first rectangle (200) and the second rectangle (202), the pop-up user interface (250) has a field (254) indicating a selected view object.

11. An apparatus for supporting object selection in web page authoring, the apparatus comprising:
a reference point determining unit (22) for determining a reference point for object selection in response to a user action performed on an editing screen (70) for a web page;
a reference area setting unit (24) for setting a reference area (76) enclosing the reference point; and **characterised by**:
a reference view object selecting unit (26) for selecting a first view object placed closest to the reference point as a reference view object from among a set of view objects wherein each view object of the set of view objects is included in the reference area;
a related view object selecting unit (28) for selecting a second view object related to the reference view object from among the set of view objects, wherein the second view object comprises at least one of a sibling object, a parent object, and a child object of the reference view object; and
a drawing unit (30) for drawing a first rectangle (200) representing the reference view object and a second rectangle (202) representing the second view object with a predetermined space therebetween which allows object selection, the first rectangle and the second rectangle being drawn independently of the reference view object and the second view object, wherein each of said view objects comprises an object being viewed on said editing screen of said web page.

12. A program product for supporting object selection in web page authoring, the program causing a computer to execute the steps of:
determining (S2) a reference point for object selection in response to a user action performed on an editing screen (70) for a web page;
setting (S3) a reference area (76) enclosing the reference point; and **characterised by**:
selecting (S4) a first view object placed closest to the reference point as a reference view object from among a set of view objects, wherein each view object of the set of view objects is included in the reference area;
selecting (S5) a second view object related to the reference view object from among the view objects included in the reference area, wherein the second view object comprises at least one of a sibling object, a parent object, and a child object of the reference view object; and
drawing (S6) a first rectangle (200) representing the reference view object and a second rectangle (202) representing the second view object with a predetermined space therebetween which allows object selection, the first rectangle and the second rectangle being drawn independently of the reference view object and the second view object, wherein each of said view objects comprises an object being viewed on said editing screen of said web page.

13. A computer program comprising computer-implementable instructions for carrying out the steps of a method according to any of claims 1 to 10.

## Patentansprüche

1. Verfahren zum Unterstützen der Objektauswahl bei einem Verfassen einer Webseite, wobei das Verfahren die Schritte umfasst:
Bestimmen (S2) eines Bezugspunkts für die Objektauswahl in Reaktion auf eine Nutzeraktion, die auf einem Editier-Bildschirm (70) für eine Webseite ausgeführt wird;
Festlegen (S3) eines Bezugsbereichs (76), der den Bezugspunkt einschließt; und **gekennzeichnet durch**:
Auswählen (S4) eines ersten am nahesten an dem Bezugspunkt gelegenen Ansichtsobjekts als ein Bezugs-Ansichtsobjekt unter einer Menge von Ansichtsobjekten, wobei sich jedes Ansichtsobjekt aus der Menge von Ansichtsobjekten in dem Bezugsbereich befindet;
Auswählen (S5) eines zweiten Ansichtsobjekts, das mit dem Bezugs-Ansichtsobjekt aus der Menge von Ansichtsobjekten verknüpft ist, wobei das zweite Ansichtsobjekt ein Schwesterobjekt und/oder ein Elternobjekt und/oder ein Kindobjekt des Bezugs-Ansichtsobjekts umfasst; und
Zeichnen (S6) eines ersten Rechtecks (200), das das Bezugs-Ansichtsobjekt darstellt, und eines zweiten Rechtecks (202), das das zweite Ansichtsobjekt mit einem vorgegebenen Zwischenabstand darstellt, der die Objektauswahl erlaubt, wobei das erste und das zweite Rechteck unabhängig von dem Bezugs-Ansichtsobjekt und dem zweiten Ansichtsobjekt gezeichnet werden und wobei jedes der Ansichtsobjekte ein Objekt umfasst, das auf dem Editier-Bildschirm der Webseite angezeigt wird.

2. Verfahren nach Anspruch 1, wobei der Schritt des Ermittelns des Bezugspunkts die Position eines Caret oder eines Maus-Cursors (74) als den Bezugspunkt bestimmt.

3. Verfahren nach Anspruch 1 oder 2, wobei der Schritt des Festlegens des Bezugsbereichs (76) eine Fläche mit vorgegebener Größe und dem Bezugspunkt als deren Mittelpunkt festlegt.

4. Verfahren nach einem der vorangehenden Ansprüche, wobei, wenn ein drittes, mit dem ausgewählten zweiten Objekt verknüpftes Ansichtsobjekt in dem Bezugsbereich (76) beinhaltet ist, in dem Schritt des Auswählens (S5) des zweiten Ansichtsobjekts auch das dritte Ansichtsobjekt ausgewählt wird.

5. Verfahren nach einem der Ansprüche 1 bis 4, das ferner den Schritt des Speicherns von Daten der Webseite in einer Baumstruktur umfasst.

6. Verfahren nach Anspruch 5, wobei in dem Schritt des Auswählens (S5) des zweiten Ansichtsobjekts das zweite Ansichtsobjekt durch Durchsuchen in der Baumstruktur ausgewählt wird.

7. Verfahren nach einem der Ansprüche 1 bis 6, wobei, wenn es sich bei dem zweiten Ansichtsobjekt um ein Elternobjekt des Bezugs-Ansichtsobjekts handelt, in dem Schritt des Zeichnens (S6) das zweite Rechteck (202) außerhalb des ersten Rechtecks (200) gezeichnet wird.

8. Verfahren nach einem der Ansprüche 1 bis 7, wobei, wenn es sich bei dem zweiten Ansichtsobjekt um ein Kindobjekt des Bezugs-Ansichtsobjekts handelt, in dem Schritt des Zeichnens das zweite Rechteck (202) in dem ersten Rechteck (200) gezeichnet wird.

9. Verfahren nach einem der Ansprüche 1 bis 8, wobei in dem Schritt des Zeichnens (S6) eine aufklappende Benutzerschnittstelle (250) gezeichnet wird, die das erste Rechteck (200) und das zweite Rechteck (202) enthält.

10. Verfahren nach Anspruch 9, wobei zu dem ersten Rechteck (200) und dem zweiten Rechteck (202) die aufklappende Benutzerschnittstelle (250) des Weiteren ein Feld (254) aufweist, das ein ausgewähltes Ansichtsobjekt anzeigt.

11. Vorrichtung zum Unterstützen der Objektauswahl beim Verfassen einer Webseite, wobei die Vorrichtung umfasst:
eine Bezugspunkt-Bestimmungseinheit (22) zum Bestimmen eines Bezugspunkts für die Objektauswahl in Reaktion auf eine Nutzeraktion, die auf einem Editier-Bildschirm (70) für eine Webseite ausgeführt wird;
eine Bezugsbereich-Festlegungseinheit (24) zum Festlegen eines Bezugsbereichs (76), der den Bezugspunkt einschließt; und **gekennzeichnet durch**:
eine Auswahleinheit des Bezugs-Ansichtsobjekts (26) zum Auswählen eines ersten am nahesten an dem Bezugspunkt gelegenen Ansichtsobjekts als ein Bezugs-Ansichtsobjekt aus einer Menge von Ansichtsobjekten, wobei jedes Ansichtsobjekt aus der Menge von Ansichtsobjekten in dem Bezugsbereich enthalten ist;
eine Auswahleinheit von verknüpften Ansichtsobjekten (28) zum Auswählen eines zweiten Ansichtsobjekts aus der Menge von Ansichtsobjekten, wobei das zweite Ansichtsobjekt mit dem Bezugs-Ansichtsobjekt verknüpft ist und ein Schwesterobjekt und/oder ein Elternobjekt und/oder ein Kindobjekt des Bezugs-Ansichtsobjekts umfasst; und
eine Zeicheneinheit (30) zum Zeichnen eines ersten Rechtecks (200), das das Bezugs-Ansichtsobjekt darstellt, und eines zweiten Rechtecks (202), das das zweite Ansichtsobjekt in einem vorgegebenen Abstand darstellt, der die Objektauswahl erlaubt, wobei das erste Rechteck und das zweite Rechteck unabhängig von dem Bezugs-Ansichtsobjekt und dem zweiten Ansichtsobjekt gezeichnet werden und wobei jedes der Ansichtsobjekte ein Objekt umfasst, das auf dem Editier-Bildschirm der Webseite angezeigt wird.

12. Programmprodukt zum Unterstützen der Objektauswahl beim Verfassen einer Webseite, wobei das Programm einen Computer zum Ausführen der Schritte veranlasst:
Bestimmen (S2) eines Bezugspunkts für die Objektauswahl in Reaktion auf eine Nutzeraktion, die auf einem Editier-Bildschirm (70) für eine Webseite ausgeführt wird;
Festlegen (S3) eines Bezugsbereichs (76), der den Bezugspunkt einschließt; und **gekennzeichnet durch**:
Auswählen (S4) eines ersten am nahesten an dem Bezugspunkt gelegenen Ansichtsobjekts als ein Bezugs-Ansichtsobjekt unter einer Menge von Ansichtsobjekten, wobei sich jedes Ansichtsobjekt aus der Menge von Ansichtsobjekten in dem Bezugsbereich befindet;
Auswählen (S5) eines zweiten Ansichtsobjekts, das mit dem Bezugs-Ansichtsobjekt aus der Menge von Ansichtsobjekten verknüpft ist, wobei das zweite Ansichtsobjekt ein Schwesterobjekt und/oder ein Elternobjekt und/oder ein Kindobjekt des Bezugs-Ansichtsobjekts umfasst; und
Zeichnen (S6) eines ersten Rechtecks (200), das das Bezugs-Ansichtsobjekt darstellt, und eines zweiten Rechtecks (202), das das zweite Ansichtsobjekt in einem vorgegebenen Abstand darstellt, der die Objektauswahl erlaubt, wobei das erste und das zweite Rechteck unabhängig von dem Bezugs-Ansichtsobjekt und dem zweiten Ansichtsobjekt gezeichnet werden und wobei jedes der Ansichtsobjekte ein Objekt umfasst, das auf dem Editier-Bildschirm der Webseite angezeigt wird.

13. Computerprogramm, das auf einem Computer realisierbare Anweisungen zum Durchführen der Schritte eines Verfahrens nach einem der Ansprüche 1 bis 10 umfasst.

## Revendications

1. Procédé de prise en charge d'une sélection d'objet lors d'une création de page Web, le procédé comprenant les étapes consistant à :
déterminer (S2) un point de référence pour une sélection d'objet en réponse à une action d'utilisateur effectuée sur un écran d'édition (70) pour une page Web ;
régler (S3) une zone de référence (76) renfermant le point de référence ; et **caractérisé par** :
sélectionner (S4) un premier objet visuel placé le plus près du point de référence qu'une objet visuel de référence provenant d'un ensemble d'objets visuels, dans lequel chaque objet visuel de l'ensemble d'objets visuels est inclus dans la zone de référence ;
sélectionner (S5) un second objet visuel relatif à l'objet visuel de référence parmi l'ensemble d'objets visuels, dans lequel le second objet visuel comprend au moins un d'un objet frère, un objet parent et un objet enfant de l'objet visuel de référence ; et
tracer (S6) un premier rectangle (200)représentant l'objet visuel de référence et un second rectangle (202) représentant le second objet visuel avec un espace prédéterminé entre ceux-ci qui permet une sélection d'objet, le premier rectangle et le second rectangle étant tracés indépendamment de l'objet visuel de référence et du second objet visuel, chacun desdits objets visuels comprend un objet étant visualisé sur ledit écran d'édition de ladite page Web.

2. Procédé selon la revendication 1, dans lequel l'étape de détermination du point de référence détermine la position d'un symbole caret ou d'un curseur de souris (74) comme le point de référence.

3. Procédé selon la revendication 1 ou 2, dans lequel l'étape de réglage de la zone de référence (76) règle une zone d'une taille prédéterminée ayant le point de référence comme centre.

4. Procédé selon l'une quelconque des revendications précédentes, dans lequel quand un troisième objet visuel relatif au second objet visuel sélectionné est inclus dans la zone de référence (76), l'étape de sélection (S5) du second objet visuel sélectionne aussi le troisième objet visuel.

5. Procédé selon l'une quelconque des revendications 1 à 4, comprenant en outre l'étape de mémorisation de données de la page Web sous forme d'une arborescence.

6. Procédé selon la revendication 5, dans lequel l'étape de sélection (S5) du second objet visuel sélectionne le second objet visuel en recherchant dans l'arborescence.

7. Procédé selon l'une quelconque des revendications 1 à 6, dans lequel quand le second objet visuel est un objet parent de l'objet visuel de référence, l'étape de tracé (S6) trace le second rectangle (202) à l'extérieur du premier rectangle (200).

8. Procédé selon l'une quelconque des revendications 1 à 7, dans lequel quand le second objet visuel est un objet enfant de l'objet visuel de référence, l'étape de tracé trace le second rectangle (202) à l'intérieur du premier rectangle (200).

9. Procédé selon l'une quelconque des revendications 1 à 8, dans lequel l'étape de tracé (S6) trace une interface d'utilisateur pop-up (250) contenant le premier rectangle (200) et le second rectangle (202).

10. Procédé selon la revendication 9, dans lequel en plus du premier rectangle (200) et du second rectangle (202), l'interface d'utilisateur pop-up (250) comporte un champ (254) indiquant l'objet visuel sélectionné.

11. Dispositif de prise en charge d'une sélection d'objet lors d'une création de page Web, le dispositif comprenant :
une unité de détermination de point de référence (22) pour déterminer un point de référence pour une sélection d'objet en réponse à une action d'utilisateur effectuée sur un écran d'édition (70) pour une page Web ;
une unité de réglage de zone de référence (24) pour régler une zone de référence (76) renfermant le point de référence ; et **caractérisé par** :
une unité de sélection d'objet visuel de référence (26) pour sélectionner un premier objet visuel placé le plus près du point de référence qu'une objet visuel de référence provenant d'un ensemble d'objets visuels, dans lequel chaque objet visuel de l'ensemble d'objets visuels est inclus dans la zone de référence ;
une unité de sélection d'objet visuel relatif (28) pour sélectionner un second objet visuel relatif à l'objet visuel de référence parmi l'ensemble d'objets visuels, dans lequel le second objet visuel comprend au moins un d'un objet frère, un objet parent et un objet enfant de l'objet visuel de référence ; et
une unité de tracé (30) pour tracer un premier rectangle (200)représentant l'objet visuel de référence et un second rectangle (202) représentant le second objet visuel avec un espace prédéterminé entre ceux-ci qui permet une sélection d'objet, le premier rectangle et le second rectangle étant tracés indépendamment de l'objet visuel de référence et du second objet visuel, dans lequel chacun desdits objets visuels comprend un objet étant visualisé sur ledit écran d'édition de ladite page Web.

12. Produit de programme pour prendre en charge une sélection d'objet lors d'une création de page Web, le programme amenant un ordinateur à exécuter les étapes consistant à :
déterminer (S2) un point de référence pour une sélection d'objet en réponse à une action d'utilisateur effectuée sur un écran d'édition (70) pour une page Web ;
régler (S3) une zone de référence (76) renfermant le point de référence ; et **caractérisé par** :
Sélectionner (S4) un premier objet visuel placé le plus près du point de référence qu'une objet visuel de référence provenant d'un ensemble d'objets visuels, dans lequel chaque objet visuel de l'ensemble d'objets visuels est inclus dans la zone de référence ;
sélectionner (S5) un second objet visuel relatif à l'objet visuel de référence parmi l'ensemble d'objets visuels, dans lequel le second objet visuel comprend au moins un d'un objet frère, un objet parent et un objet enfant de l'objet visuel de référence ; et
tracer (S6) un premier rectangle (200)représentant l'objet visuel de référence et un second rectangle (202) représentant le second objet visuel avec un espace prédéterminé entre ceux-ci qui permet une sélection d'objet, le premier rectangle et le second rectangle étant tracés indépendamment de l'objet visuel de référence et du second objet visuel, dans lequel chacun desdits objets visuels comprend un objet étant visualisé sur ledit écran d'édition de ladite page Web.

13. Programme informatique comprenant des instructions implémentables par ordinateur pour mettre en oeuvre les étapes d'un procédé selon l'une quelconque des revendications 1 à 10.
